Europäisches Patentamt

European Patent Office

Office européen des brevets

(11) Numéro de publication: **0 347 343**
**A1**

# DEMANDE DE BREVET EUROPEEN

(21) Numéro de dépôt: **89420207.6**

(22) Date de dépôt: **12.06.89**

(51) Int. Cl.⁴: **H 02 M 3/156**
**H 04 M 19/04**

(30) Priorité: **14.06.88 FR 8808330**

(43) Date de publication de la demande:
**20.12.89 Bulletin 89/51**

(84) Etats contractants désignés: **DE GB IT NL**

(71) Demandeur: **HORLOGERIE PHOTOGRAPHIQUE FRANCAISE (société anonyme)**
**Avenue de Savoie**
**F-74130 Bonneville (FR)**

(72) Inventeur: **Desbiolles, Claude**
**"La Madeleine" Cornier**
**F-74800 La Roche sur Foron (FR)**

**Martin, Pascal**
**Le Coudray Domancy**
**F-74700 Sallanches (FR)**

(74) Mandataire: **de Beaumont, Michel**
**Cabinet Poncet 7, chemin de Tillier B.P. 317**
**F-74008 Annecy Cédex (FR)**

(54) Convertisseur alternatif-continu, et son application à un circuit de poste téléphonique.

(57) Le circuit convertisseur selon l'invention comprend un circuit linéarisateur (8), un régulateur programmable de tension (12) réglant la tension de source intermédiaire (4), et un convertisseur de tension continu-continu (13) à découpage. Un détecteur de valeur efficace de tension d'entrée (11) permet de régler la tension de source intermédiaire (4) en fonction de la tension d'entrée. La tension de consigne (7) fixant la tension de sortie (5) décroît lorsque la charge à la sortie dépasse la capacité énergétique de la source intermédiaire.

Fig.1

EP 0 347 343 A1

## Description

## CONVERTISSEUR ALTERNATIF-CONTINU, ET SON APPLICATION A UN CIRCUIT DE POSTE TELEPHONIQUE

La présente invention concerne un circuit permettant de convertir une énergie électrique sous forme d'une tension alternative en une énergie électrique sous forme de tension continue.

L'invention concerne plus précisément les convertisseurs d'énergie alternative-continue à basse puissance et à bon rendement énergétique.

On connait déjà des convertisseurs d'énergie électrique alternatif-continu comprenant des moyens pour convertir une tension alternative d'entrée en un courant disponible à une borne intermédiaire formant source d'énergie intermédiaire, la source d'énergie intermédiaire alimentant un convertisseur d'énergie électrique continu-continu à découpage dont la sortie fournit une énergie électrique à tension continue appropriée constituant une source principale d'énergie. Le convertisseur d'énergie électrique continu-continu est habituellement référencé à une tension de consigne déterminant la valeur de tension de la source principale d'énergie. Des moyens de stabilisation de tension, connectés à l'entrée du convertisseur d'énergie continu-continu à découpage, permettent de fixer la tension de la source intermédiaire. Des moyens de stockage d'énergie intermédiaire sont le plus souvent connectés aux bornes de la source intermédiaire. Des moyens de redressement double alternance sont interposés entre les bornes d'entrée et les moyens de conversion de tension-courant. De tels convertisseurs d'énergie alternative-continue peuvent constituer par exemple une alimentation stabilisée dont la tension de sortie est réglable en faisant varier la tension de consigne.

Plus récemment, ce type de convertisseur d'énergie alternatif-continu a fait l'objet de réalisations sous forme de circuits intégrés destinés à des applications en téléphonie. Plus précisément, ces circuits servent à convertir un signal d'appel, traditionnellement sinusoidal, en une tension continue pour alimenter un dispositif de sonnerie électronique dans un poste téléphonique. A titre d'exemple, on peut mentionner le circuit diffusé par la société THOMSON semi-conducteur sous la référence TEA7031 d'une part et, d'autre part, un ensemble de circuits TCA3381 et TCA3382 diffusés par MOTOROLA semi-conducteur.

L'inconvénient de ces circuits est que leur rendement énergétique est généralement médiocre, de sorte qu'il n'est pas facile de satisfaire avec de tels circuits les spécifications techniques fixées en matière énergétique en phase d'appel par les normes applicables en téléphonie. On constate en outre que, dans de tels circuits, la source principale d'énergie présente une décroissance abrupte en cas de surcharge en courant. Ceci peut être un inconvénient.

La présente invention a notamment pour objet de remédier à cet inconvénient en proposant une nouvelle structure de circuit permettant d'améliorer sensiblement la transmission d'énergie électrique. Selon l'invention, on recherche une optimisation systématique, dans chaque étape de conversion énergétique, pour obtenir le maximum de puissance électrique en sortie du convertisseur. Un effet recherché dans le circuit selon la présente invention est donc l'optimisation de la conversion énergétique de la tension alternative présente à l'entrée du convertisseur en une tension de sortie, appelée source principale. Dans cette conversion, si les éléments déterminant le rendement du convertisseur continu-continu à découpage sont bien connus, l'optimisation de l'etape de conversion énergétique entre l'entrée du convertisseur et la source dite intermédiaire constitue une base de la présente invention.

Un premier effet recherché dans le circuit selon la présente invention est donc l'optimisation de l'étape de conversion énergétique entre l'entrée du convertisseur alternatif-continu et la source intermédiaire.

Un second effet recherché dans le circuit selon la présente invention est son aptitude à s'adapter aux conditions variables d'utilisation. L'optimisation doit s'effectuer de manière automatique en fonction de l'amplitude de la tension alternative à l'entrée du convertisseur, de telle sorte que, appliqué à la téléphonie, le circuit s'adapte automatiquement pour permettre au système de se placer au point de fonctionnement optimal quel que soit le niveau du signal d'appel.

Bien que les exemples servant à illustrer le principe fonctionnel d'un tel convertisseur alternatif-continu selon l'invention soient empruntés à la téléphonie, le domaine d'application de l'invention peut s'étendre à d'autres domaines, chaque fois que l'on recherche un bon rendement énergétique.

Un autre objet de l'invention est de récupérer au moins en grande partie l'énergie perdue dans les moyens convertissant une tension alternative d'entrée en une source d'énergie intermédiaire. Cette énergie peut être utilisée, notamment dans des applications de téléphonie, pour alimenter d'autres circuits électroniques, par exemple un microsystème.

Un autre objet de l'invention est d'éviter une chute brusque de tension de sortie en cas de surcharge en courant, prévoyant au contraire une décroissance progressive de tension de sortie.

Pour atteindre ces objets ainsi que d'autres, le convertisseur alternatif-continu selon l'invention comprend les éléments principaux d'un convertisseur alternatif-continu connu, avec des moyens de conversion de la tension d'entrée en courant, des moyens de stabilisation de tension pour fixer la tension de la source intermédiaire, un convertisseur continu-continu à découpage.

Selon l'invention, la tension d'entrée est, dans un premier temps, transformée en une tension continue régulée, ou source intermédiaire, dont la valeur est sensiblement égale à la valeur efficace de la tension d'entrée. Telle est la condition d'optimisation énergétique. Dans la description qui suit, et dans les revendications, on considèrera que la valeur de tension continue régulée de source intermédiaire est "sensiblement égale" à la valeur efficace de tension d'entrée lorsque la différence entre ladite tension efficace d'entrée et ladite tension continue est inférieure ou égale à trente pour cent de ladite tension efficace d'entrée.

En outre, pour que cette condition soit toujours respectée quelles que soient les configurations d'un réseau téléphonique, l'invention propose une solution d'autoadaptabilité permettant au système de se polariser automatiquement au point de fonctionnement optimal.

Selon l'invention, ces moyens de stabilisation sont pour cela du type de régulateur programmable de tension, c'est à dire que la valeur de cette source intermédiaire est réglable en fonction d'un signal appelé ci-après "valeur de consigne" ; des moyens génèrent une telle valeur de consigne sous forme d'une fonction croissante de la tension d'entrée du convertisseur alternatif-continu ; les moyens de génération de valeur de consigne comprennent par exemple un circuit de mesure de la valeur efficace de tension d'entrée. L'ensemble constitue des moyens d'autoadaptabilité.

Les moyens, appelés convertisseur tension-courant, permettent de convertir une tension alternative d'entrée en un courant alternatif produisant une impédance d'entrée appropriée, et fournissant un courant à la source intermédiaire ; des moyens de blocage sont alors interposés entre la sortie du convertisseur tension-courant et la source intermédiaire, interdisant la décharge de moyens de stockage connectés en parallèle sur la source intermédiaire.

L'énergie est transférée de la source intermédiaire vers la sortie par une technique de découpage connue. Une particularité de l'invention consiste à prévoir une référence flexible pour commander le convertisseur continu-continu à découpage, la référence dépendant de la capacité énergétique de la source intermédiaire. Un tel concept autorise l'usage d'un interrupteur de découpage de moyenne performance, notamment en ce qui concerne la caractéristique à l'état passant de l'interrupteur. En outre, une telle référence permet d'obtenir une décroissance progressive de la tension de sortie en cas de surcharge, alors que cette décroissance est abrupte dans le cas d'une référence fixe.

Selon un mode de réalisation préféré de l'invention, le convertisseur tension-courant présente une structure particulière permettant la récupération d'une partie de l'énergie, et la constitution d'une source d'alimentation auxiliaire pour l'alimentation de dispositifs auxiliaires tels qu'un microsystème.

D'autres objets, caractéristiques et avantages de la présente invention ressortiront de la description suivante de modes de réalisation particuliers, faite en relation avec les figures jointes, parmi lesquelles :

- la figure 1 représente le schéma synoptique d'un convertisseur alternatif-continu selon l'invention ;

- la figure 2 illustre en détail un mode de réalisation des circuits de détection de valeur efficace, de régulateur programmable de tension, de convertisseur de tension continu-continu selon l'invention ; et

- la figure 3 illustre en détail un mode de réalisation préféré du circuit de convertisseur tension-courant.

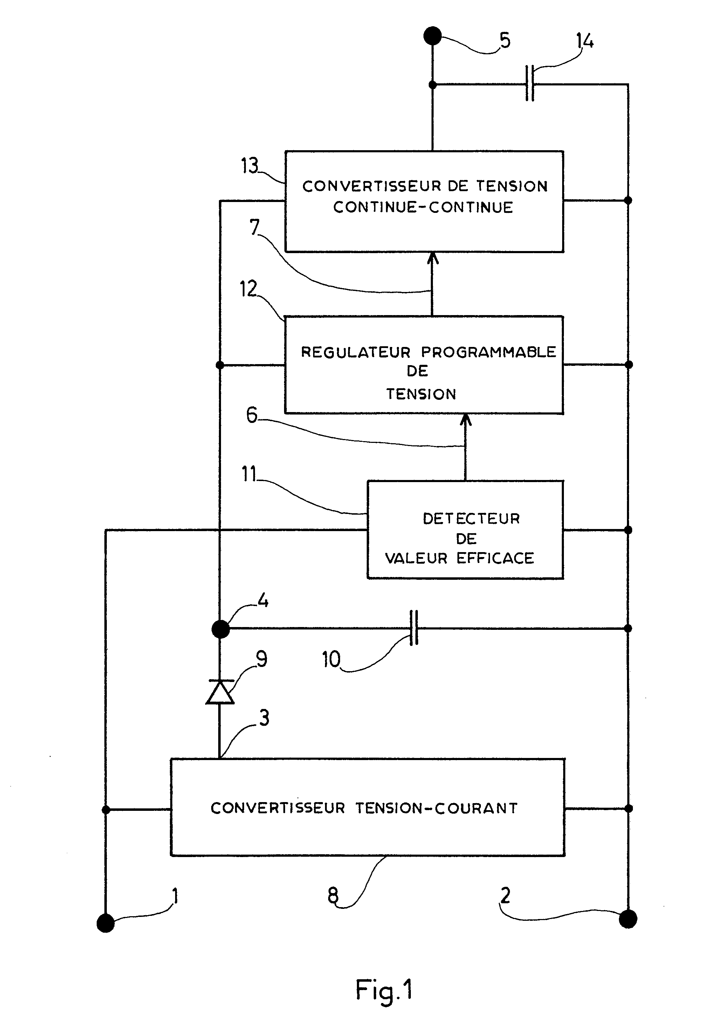

Les bornes d'entrée 1 et 2 reçoivent une tension d'entrée préalablement redressée. Par exemple, dans le cas d'un circuit téléphonique, le signal d'appel, présent à l'entrée du poste, est transformé en une tension unidirectionnelle par un redresseur double alternance non représenté sur la figure. Cette tension unidirectionnelle, non constante, présente entre les bornes 1 et 2, est convertie en un courant par un convertisseur tension-courant 8. Le courant ainsi obtenu à la sortie 3 du convertisseur 8 est transmis à la borne 4, via les moyens 9, pour constituer entre les bornes 4 et 2 une source de tension continue appelée ci-après "source intermédiaire d'énergie", selon l'invention. Sur la figure 1, on a représenté, entre les bornes 3 et 4, une diode 9 dont la cathode est connectée à la borne 4 et dont l'anode est connectée à la borne 3. La diode 9 est un dispositif évitant le passage de courant de la borne 4 vers la borne 3, empêchant ainsi la décharge de cette source intermédiaire d'énergie.

Des moyens de stabilisation de tension 12 sont connectés en parallèle aux bornes de la source intermédiaire 2 et 4. Ces moyens fixent la tension de la source intermédiaire. Un moyen de stockage d'énergie 10 intermédiaire tel qu'un condensateur est connecté aux bornes 2 et 4 de la source intermédiaire. Un convertisseur d'énergie électrique continu-continu 13 à découpage, du type sous-volteur c'est à dire produisant une tension de sortie inférieure à la tension d'entrée, a ses bornes d'entrée connectées aux bornes de la source intermédiaire 2 et 4, et fournit la tension de sortie sur les bornes 2 et 5. Un condensateur 14 d'accumulation d'énergie est connecté aux bornes de sortie 2 et 5.

Les moyens de stabilisation de tension 12 sont de type Zener programmable, et fournissent une tension de sortie programmable et réglable en fonction d'une valeur de consigne présente sur le conducteur d'entrée 6. Les moyens de stabilisation de tension 12 présentent une caractéristique tension-courant de type Zener dont la tension de coude peut être commandée à l'aide de la valeur de consigne 6. Le conducteur d'entrée 6 est connecté à la sortie d'un détecteur de valeur efficace 11 dont l'entrée est connectée aux bornes d'entrée 1 et 2 du convertisseur alternatif-continu.

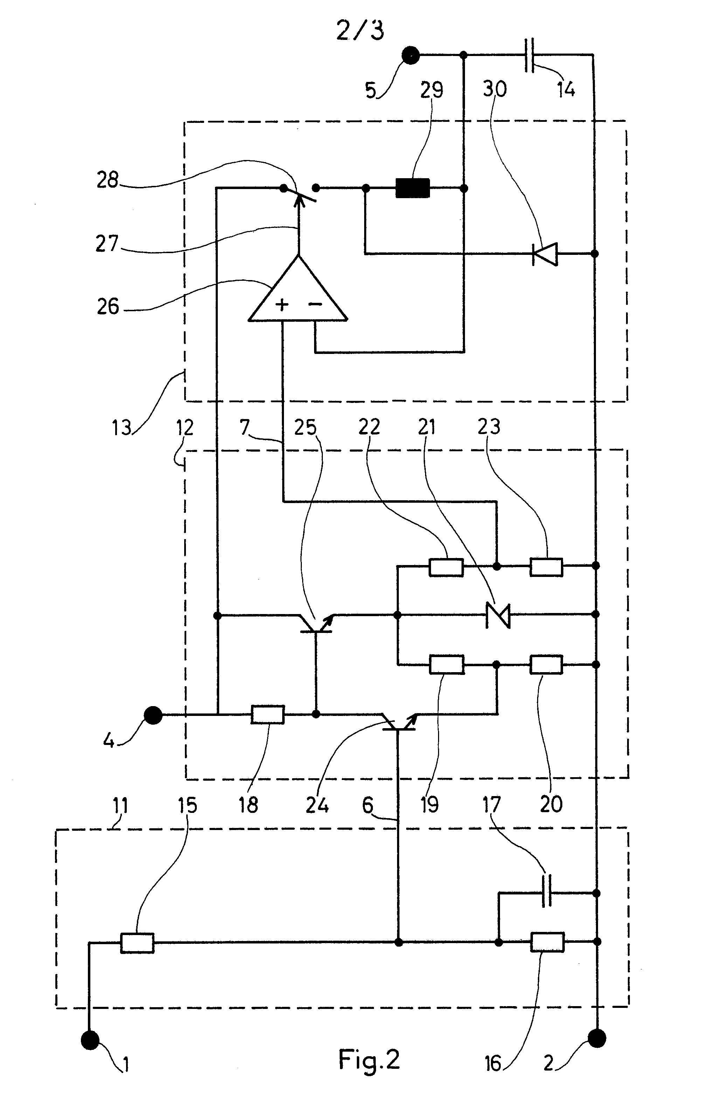

Comme le représente la figure 2, les moyens 11 de génération de la valeur de consigne comprennent un diviseur de tension formé par les deux résistances 15 et 16 connectées en série, un condensateur de filtrage 17 étant connecté en parallèle sur la résistance 16. Le conducteur de sortie 6 est relié au point commun des résistances 15 et 16. Un tel circuit est adapté pour fournir sur le conducteur 6 une tension proportionnelle à la valeur efficace de la tension sur les bornes 1 et 2.

Le moyen de stabilisation de tension de type Zener programmable 12, dans le mode de réalisation représenté sur la figure 2, comprend une diode Zener 21 servant de référence de tension, un transistor 25 en émetteur-suiveur en série avec la Zener, et un transistor de commande 24 dont la base est connectée au conducteur d'entrée 6 et dont le collecteur est connecté à la borne 4 de source intermédiaire par l'intermédiaire d'une résistance 18. Deux résistances 19 et 20 connectées en série aux bornes de la diode 21 forment un diviseur de tension dont le point milieu est connecté à l'émetteur du transistor 24. Le diviseur de tension formé par les résistances 19 et 20 permet de définir le seuil de conduction du transistor 24. Le courant de collecteur du transistor de commande 24 permet de déterminer la variation de la tension de source intermédiaire, à la borne 4, en fonction de la tension d'entrée sur le conducteur d'entrée 6. Deux résistances 22 et 23 mises en série sont connectées en parallèle sur la diode Zener 21. Leur point milieu, connecté à un conducteur de sortie 7, sert de référence flexible pour le convertisseur d'énergie électrique continu-continu 13.

Le convertisseur continu-continu 13, dans le mode de réalisation représenté sur la figure 2, comprend un interrupteur de découpage 28 tel qu'un transistor de commutation, dont le circuit principal est connecté entre la borne 4 de la source intermédiaire et la borne 5 de sortie. L'interrupteur de découpage 28 est connecté en série avec une inductance 29; une diode 30, connectée entre la borne 2 et le point de connection entre l'inductance 29 et l'interrupteur de découpage 28, permet la décharge de ladite inductance durant l'ouverture dudit interrupteur. L'interrupteur de découpage 28 est commandé par un signal 27 fourni par un comparateur 26 comparant la tension de référence présente sur le conducteur 7 à la tension de sortie présente sur la borne 5. On peut noter qu'une telle structure de convertisseur continu-continu est standard.

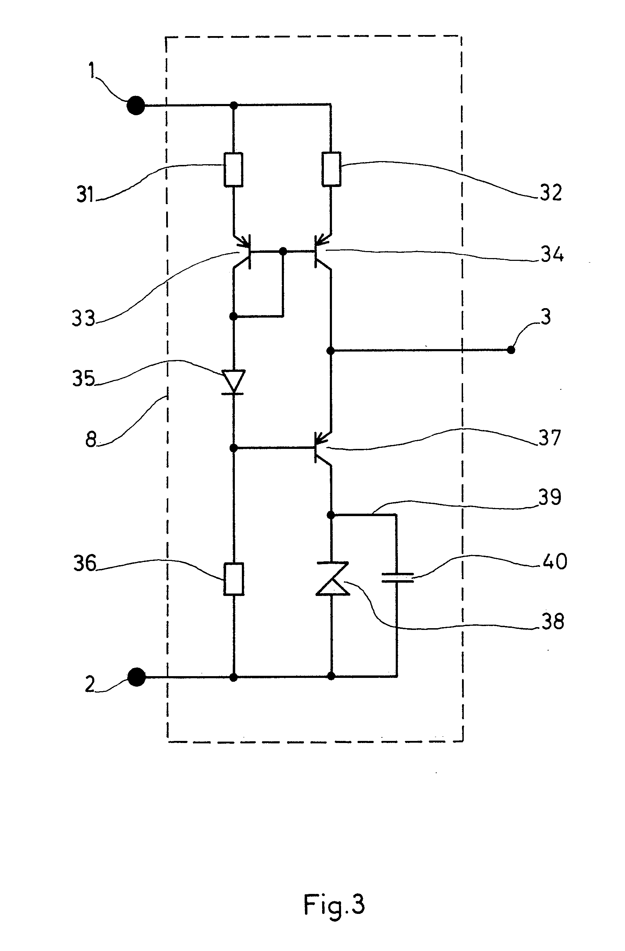

On a représenté sur la figure 3 un mode de réalisation du convertisseur tension-courant 8 qui a pour propriété de présenter, vu de l'entrée entre les bornes 1 et 2, une impédance sensiblement constante de type résistif. La présence d'un tel circuit évite la génération d'harmoniques de courant sur la ligne d'alimentation du convertisseur. Ce circuit 8, ou circuit linéarisateur, réalise une transformation de la tension d'entrée en un courant de sortie. Il comporte un miroir de courant formé par un ensemble constitué des résistances 31 et 32 et des transistors 33 et 34 dont l'entrée est reliée à la borne 2 par l'intermédiaire d'une résistance 36. La tension d'entrée est convertie, via substantiellement les résistances 31 et 36, en un courant qui est envoyé à la borne 3 à l'aide dudit miroir. Un transistor 37 est adjoint audit miroir, comme le représente la figure, pour constituer un linéarisateur en ce sens que le courant vu aux bornes 1 et 2 est dépourvu de distorsions harmoniques, quel que soit le niveau de ladite tension d'entrée.

Le fonctionnement est le suivant : lorsque l'amplitude de la tension d'entrée aux bornes 1 et 2 atteint sensiblement le seuil de tension Zener programmable fixé sur la borne 4 par le circuit 12, le transistor 37 devient bloquant. Le courant traversant le transistor 34 charge le condensateur 10. Dans le cas contraire, la diode 9 se bloque à son tour et le transistor 37 conduit vers la ligne le courant traversant le transistor 34.

Dans le mode de réalisation représenté, le collecteur du transistor 37 est connecté à la borne 2 par l'intermédiaire d'une diode Zener 38 en parallèle sur un condensateur 40. La borne 39, point de connection entre la diode Zener 38 et le transistor 37, représente la sortie d'une alimentation auxiliaire selon l'invention. Cette alimentation auxiliaire permet d'alimenter des circuits annexes, par exemple un microsystème contrôlant l'ensemble du poste téléphonique.

Une diode 35, connectée en série avec la résistance 36, permet de prévenir la saturation du transistor 34 principal de linéarisateur. Son anode est pour cela connectée à la base du transistor 34, et sa cathode est connectée à la résisance 36 elle-même connectée à la borne 2. La cathode de la diode 35 est elle-même connectée également à la base du transistor 37.

La demanderesse a pu constater que la puissance maximale au niveau de la source intermédiaire sur les bornes 4 et 2 est obtenue lorsque la tension aux bornes 4 et 2 de la source intermédiaire est égale ou très voisine de la valeur efficace de la tension d'entrée du convertisseur tension-courant aux bornes 1 et 2. En réalité, une bonne transmission de puissance électrique entre l'entrée 1, 2 et la source intermédiaire 4, 2 est obtenue lorsque la tension aux bornes 4 et 2 est sensiblement égale à la valeur efficace de la tension d'entrée du convertisseur tension-courant aux bornes 1 et 2. De ce fait, il est nécessaire d'adapter la tension de source intermédiaire aux bornes 4 et 2 en fonction de la tension aux bornes 1 et 2 grâce au régulateur de tension programmable 12 de telle sorte que ce principe soit toujours satisfait, quelles que soient la longueur de ligne et les caractéristiques du générateur d'appel.

Par opposition à une référence fixe sur le conducteur 7 fournie par un régulateur de tension à bandgap par exemple, on a introduit, selon l'invention, le principe d'une référence flexible, dépendante de la capacité énergétique de la source intermédiaire. Le premier avantage d'une référence flexible est que la tension de sortie décroît progressivement pour une surcharge, alors que cette décroissance serait abrupte dans le cas d'une référence fixe. En effet, par le fait que le comparateur 26 compare la tension de sortie sur la borne 5 avec la tension sur le conducteur 7 qui est égale à une fraction de la tension de la diode Zener 21, la tension de consigne sur le conducteur 7 est constante tant que la diode Zener 21 est polarisée au-delà de son seuil de Zener. Le courant qui traverse la diode Zener 21 et le transistor 25 se retranche du courant fourni par la source intermédiaire sur la borne 4. Il en résulte que, lorsque le courant sur la borne de sortie 5 tend à croître, par exemple à la suite d'une augmentation sensible de charge, le courant traversant la diode Zener 21 tend à décroître. A partir d'un seuil déterminé du courant de sortie, dépassant la capacité énergétique de la source intermédiaire, la tension de cette source décroît en forçant ainsi la tension aux bornes de la diode Zener à décroître. Dans ce cas, la tension de consigne sur le conducteur 7 tend à décroître, produisant une décroissance similaire de la tension sur la borne de sortie 5. Grâce à cette décroissance de tension de consigne 7, le convertisseur altenatif-continu continue à fournir de l'énergie sur sa borne de sortie 5 sans que l'interrupteur de découpage 28 ne soit forcé en permanence dans son état passant.

Un autre avantage est que la pointe de courant dans l'inductance 29 est beaucoup plus faible, par rapport au cas d'une référence fixe. De ce fait, la caractéristique en saturation du transistor de commutation réalisant l'interrupteur de commutation 28 peut être moins perfor mante. En revanche, comme la période de découpage est beaucoup plus faible, ce transistor doit avoir une bonne vitesse de commutation, de l'ordre d'une centaine de nano-seconde.

La présente invention n'est pas limitée aux modes de réalisation qui ont été explicitement décrits, mais elle en inclut les diverses variantes et généralisations contenues dans le domaine des revendications ci-après.

## Revendications

1 - Convertisseur d'énergie électrique alternatif-continu, comprenant :
- des moyens (8) de conversion tension-courant pour convertir la tension d'entrée en un courant disponible à une borne intermédiaire (4) formant source intermédiaire,
- un convertisseur d'énergie continu-continu (13) à découpage, dont l'entrée est alimentée par la source intermédiaire, et dont la sortie fournit une énergie électrique à tension continue appropriée sur une borne de sortie (5) constituant une source principale d'énergie,
- le convertisseur d'énergie électrique continu-continu (13) étant commandé par une référence (7) déterminant la valeur de tension de la source principale d'énergie (5),
- des moyens de stabilisation de tension (12), connectés aux bornes de la source intermédiaire, fixant la tension de ladite source intermédiaire (4),
- des moyens de stockage (10) d'énergie électrique connectés aux bornes (2, 4) de la source intermédiaire,
caractérisé en ce que les moyens de stabilisation de tension (12) sont adaptés de telle manière que la tension de ladite source intermédiaire (4) est sensiblement égale à la valeur efficace de ladite tension d'entrée.

2 - Convertisseur selon la revendication 1, caractérisé en ce que :
- les moyens de stabilisation de tension (12) de la source intermédiaire sont de type programmable, présentant une caractéristique tension-courant de type Zener dont la tension de coude peut être commandée à l'aide d'une valeur de consigne (6),
- des moyens (11) de génération de valeur de consigne génèrent une consigne sous forme d'une fonction croissante de la tension d'entrée présente sur les bornes d'entrée (1, 2) du convertisseur alternatif-continu,

de sorte que la tension de source intermédiaire varie en fonction de la tension d'entrée.

3 - Convertisseur selon la revendication 2, caractérisé en ce que les moyens (11) de génération de valeur de consigne (6) comprennent un circuit de mesure de la valeur efficace de tension d'entrée, l'ensemble étant adapté de telle façon que la tension de source intermédiaire (4) est sensiblement égale à la valeur efficace de tension d'entrée.

4 - Convertisseur selon l'une des revendications 1, 2 ou 3, caractérisé en ce que les moyens de conversion tension-courant (8) présentent une résistance d'entrée appropriée et fournissent un courant à la source intermédiaire (4), la sortie desdits moyens de conversion tension-courant (8) étant réliée à la source intermédiaire par des moyens de blocage (9) interdisant la décharge des moyens de stockage (10) de la source intermédiaire.

5 - Convertisseur selon la revendication 4, caractérisé en ce que les moyens de conversion tension-courant (8) comportent un miroir de courant formé par un ensemble composé de résistances (31, 32) et de transistors (33, 34) dont l'entrée est reliée à la borne (2) d'entrée par l'intermédiaire d'une résistance (36), de sorte que la tension d'entrée est convertie, via substantiellement les résistances (31, 36), en un courant disponible à la sortie (3) à l'aide dudit miroir, pour être transmis à la source intermédiaire (4), via le moyen de blocage (9).

6 - Convertisseur selon la revendication 5, caractérisé en ce qu'un transistor (37) est adjoint audit miroir pour constituer un linéarisateur, de telle sorte que le courant vu aux bornes d'entrée (1, 2) est dépourvu de distorsions harmoniques quel que soit le niveau de ladite tension d'entrée.

7 - Convertisseur selon l'une des revendications 5 ou 6, caractérisé en ce qu'une diode (35) est connectée de telle manière qu'elle prévient la saturation du transistor (34) principal de linéarisateur.

8 - Convertisseur selon l'une quelconque des revendications 5 à 7, caractérisé en ce que les moyens de conversion tension-courant (8) comprennent un condensateur de filtrage (40) et une diode Zener (38) de limitation, pour former une source de tension auxiliaire récupérant le courant perdu dans le collecteur du transistor (37).

9 - Convertisseur selon l'une quelconque des revendications 4 à 8, caractérisé en ce que le moyen de blocage (9) interdisant la décharge est une diode.

10 - Convertisseur selon l'une quelconque des revendications 1 à 9, caractérisé en ce qu'il comprend un condensateur (10) connecté aux bornes de la source intermédiaire (4), et un condensateur (14) connecté aux bornes de sortie (5).

11 - Convertisseur selon la revendication 3, caractérisé en ce que le circuit de mesure de tension efficace (11) comprend un diviseur de tension formé par deux résistances (15, 16) et un condensateur de filtrage (17) et fournit à la sortie (6) une tension de commande proportionnelle à la valeur efficace de la tension d'entrée du convertisseur alternatif-continu.

12 - Convertisseur selon l'une quelconque des revendications 1 à 11, caractérisé en ce que le moyen de stabilisation de tension (12) de type programmable comporte une diode Zener (21) servant de référence, un transistor (25) en émetteur-suiveur et un transistor de commande (24) dont la base est reliée à ladite tension de commande (6) et dont le courant de collecteur permet, via une résistance (18), de déterminer la variation de tension de ladite source intermédiaire (4) en fonction de la valeur efficace de ladite tension d'entrée (1, 2), le moyen de stabilisation de tension (12) comprenant, en outre, un diviseur de tension formé par deux résistances (19, 20) permettant de définir le seuil de conduction du transistor de commande (24).

13 - Convertisseur selon l'une quelconque des revendications 1 à 12, caractérisé en ce que le convertisseur continu-continu (13) comprend un interrupteur de découpage (28) en série avec une inductance (29), une diode (30) permettant la décharge de ladite inductance durant l'ouverture dudit interrupteur, des moyens (26) comparant la valeur de tension de sortie sur la borne de sortie (5) à une référence (7) pour commander l'interrupteur de découpage (28).

14 - Convertisseur selon l'une quelconque des revendications 1 à 13, caractérisé en ce que la référence (7) commandant le convertisseur continu-continu (13) est une fraction de tension de diode Zener (21) du moyen de stabilisation de tension de type Zener programmable (12), de telle sorte que la référence (7) décroît lorsque la charge à la sortie du convertisseur alternatif-continu dépasse la capacité énergétique de la source dite intermédiaire (4).

15 - Poste téléphonique, caractérisé en ce qu'il comprend un convertisseur alternatif-continu selon l'une quelconque des revendications 1 à 14, pour l'alimentation du circuit de sonnerie.

1/3

CONVERTISSEUR DE TENSION
CONTINUE-CONTINUE

REGULATEUR PROGRAMMABLE
DE
TENSION

DETECTEUR
DE
VALEUR EFFICACE

CONVERTISSEUR TENSION-COURANT

Fig.1

## 2/3

Fig.2

Fig.3

# RAPPORT DE RECHERCHE EUROPEENNE

**Office européen des brevets**

EP 89 42 0207

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0135412 (THOMSON)<br>* abrégé *<br>* page 1, ligne 29 - page 2, ligne 12 *<br>* page 2, ligne 28 - ligne 31 *<br>* page 4, ligne 30 - ligne 35 *<br>--- | 1, 6,<br>10, 15 | H02M3/156<br>H04M19/04 |
| A | US-A-3403321 (MOSAK)<br>* revendication 1 *<br>--- | 1 | |
| A | FR-A-2554989 (SGS-ATES)<br>* page 1, ligne 25 - ligne 33 *<br>* revendications 1, 4, 12; figure 2 *<br>--- | 1, 2, 5 | |
| A | US-A-4599494 (WELTY)<br>* colonne 2, ligne 14 - ligne 24 *<br>* revendication 2 *<br>----- | 1, 5, 15 | |

**DOMAINES TECHNIQUES RECHERCHES (Int. Cl.4)**

H04M
H02M
G05F

Le présent rapport a été établi pour toutes les revendications

| Lieu de la recherche | Date d'achèvement de la recherche | Examinateur |
|---|---|---|
| LA HAYE | 15 SEPTEMBRE 1989 | VAN DEN DOEL J. |

EPO FORM 1503 03.82 (P0402)